# EUROPEAN PATENT APPLICATION

(11) **EP 4 583 338 A1**
(43) Date of publication of application: **09.07.2025**
(21) Application number: 24223463.1
(22) Date of filing: 27.12.2024
(51) Int. Cl.: H02H 3/087, H02H 3/02

(54) **SOLID STATE CIRCUIT BREAKER**

(30) Priority: 04.01.2024 CN 202420022770 U
(71) Applicant: Schneider Electric (China) Co., Ltd., Beijing 100102 (CN)
(72) Inventor: BAI, Heng, Shanghai 201203 (CN); FAN, Jianguo, Shanghai 201203 (CN); SHI, Ying, Shanghai 201203 (CN); ZHAO, Haijun, Shanghai 201203 (CN); LU, Feng, Shanghai 201203 (CN); CHEN, Jiamin, Shanghai 201203 (CN)
(74) Representative: Manitz Finsterwald Patent- und Rechtsanwaltspartnerschaft mbB

(57) **Abstract**

Embodiments of the disclosure provide a solid state circuit breaker (10), including: a first input end (11) and a second input end (12) for receiving a power input; a first output end (13) and a second output end (14) for providing a power supply output; a first On-Off unit (15) including a first switching device (151) and a second switching device (152) connected in series between the first input end and the first output end; a capacitor (16), a first end of the capacitor being connected to a node between the first switching device and the second switching device and a second end of the capacitor being connected to a node between the second input end and the second output end; and a bidirectional transient voltage suppression diode (17) connected in parallel with the capacitor.

## Description

### FIELD

Embodiments of the present disclosure relate to a field of electrical equipment, and more particularly, to a solid state circuit breaker.

### BACKGROUND

With development of power electronic technologies, a solid state circuit breaker is generally disposed on a branch of a power distribution system, so as to respond to and cut off a faulty branch in a microsecond-level time scale in a case that the branch fails, thereby protecting a main loop. In a working process of a conventional solid state circuit breaker, at a moment when a short circuit occurs on a downstream line of the branch, a current of an upstream line changes greatly, and it is difficult to implement selective protection for the main loop. Furthermore, after a switching device of the solid state circuit breaker is disconnected, a voltage stress on the switching device is usually caused to be excessive due to superposition of an inductive voltage of an inductor on the line and an input voltage of a power supply. In addition, the conventional solid state circuit breaker is not compatible with a variety of power supply systems, such as a TN-S system and an IT system, etc. Therefore, the design needs to be optimized.

### SUMMARY

A purpose of the present disclosure to provide a solid state circuit breaker to at least partially address the problems described above.

In a first aspect of the present disclosure, there is provided a solid state circuit breaker, including: a first input end and a second input end for receiving a power input; a first output end and a second output end for providing a power supply output; a first On-Off unit including a first switching device and a second switching device connected in series between the first input end and the first output end; a capacitor, a first end of the capacitor being connected to a node between the first switching device and the second switching device, and a second end of the capacitor being connected to a node between the second input end and the second output end; and a bidirectional transient voltage suppression diode connected in parallel with the capacitor.

According to the solid state circuit breaker in the embodiments of the present disclosure, by adopting the capacitor having the first end connected to the node between the first switching device and the second switching device and the second end connected to the node between the second input end and the second output end, electric energy input by a power supply can be stored, so as to release the electric energy in a case that a short-circuit fault occurs in a downstream line of a branch, thereby reducing a current change of an upstream line. In addition, by adopting a bidirectional transient voltage suppression diode connected in parallel with the capacitor, an excessive voltage stress on the switching device of the solid state circuit breaker can be reliably prevent.

In some embodiments, the solid state circuit breaker further includes a switching unit including a first isolation switch and a second isolation switch, a first end of the first isolation switch being connected to the first input end, and a first end of the second isolation switch being connected to the second input end.

In some embodiments, the solid state circuit breaker further includes a first inductor and a second inductor, a first end of the first inductor being connected to a second end of the first isolation switch and a second end of the first inductor being connected to the first switching device, a first end of the second inductor being connected to the second switching device and a second end of the second inductor being connected to the first output end.

In some embodiments, the solid state circuit breaker further includes a first diode and a second diode, a cathode of the first diode being connected to a node between the first inductor and the first switching device and an anode of the first diode being connected to a second end of the second isolation switch, a cathode of the second diode being connected to a node between the second switching device and the second inductor and an anode of the second diode being connected to a node between the capacitor and the second output end.

In some embodiments, the solid state circuit breaker further includes a fusing unit including a first fuse, a second fuse, and a third fuse, a first end of the first fuse being connected to the node between the first inductor and the first switching device, and a second end of the first fuse being connected to the cathode of the first diode, a first end of the second fuse being connected to a node between the first switching device and the second inductor and a second end of the first fuse being connected to the cathode of the second diode, a first end of the third fuse being connected to the node between the first switching device and the second switching device and a second end of the third fuse being connected to the first end of the capacitor.

In some embodiments, the first switching unit further includes a third diode and a fourth diode, the third diode being connected in parallel with the first switching device, and the fourth diode being connected in parallel with the second switching device.

In some embodiments, the solid state circuit breaker further includes a second On-Off unit including a third switching device and a fourth switching device connected in series between the second input end and the second output end.

In some embodiments, the solid state circuit breaker further includes a third inductor, a first end of the third inductor being connected to the fourth switching device and a second end of the third inductor being connected to the second output end.

In some embodiments, the second On-Off unit further includes a fifth diode and a sixth diode, the fifth diode being connected in parallel with the third switching device, and the sixth diode being connected in parallel with the fourth switching device.

It should be understood that content described in the Summary is not intended to limit key features or essential features of embodiments of the disclosure, nor is it intended to limit a scope of the present disclosure. Other features of the present disclosure will become readily understood from the following description.

### BRIEF DESCRIPTION OF THE DRAWINGS

The above and other features, advantages, and aspects of various embodiments of the present disclosure will become more apparent with reference to the following detailed description taken in conjunction with drawings. In the drawings, the same or similar reference signs denote the same or similar elements, wherein:
FIG. 1 illustrates a schematic circuit diagram of a solid state circuit breaker according to an embodiment of the present disclosure;
FIG. 2 illustrates a schematic circuit diagram of a solid state circuit breaker according to another embodiment of the present disclosure.

### DETAILED DESCRIPTION

Embodiments of the present disclosure will be described in more detail below with reference to the drawings. Although the embodiments of the present disclosure are shown in the drawings, it should be understood that the present disclosure may be implemented in various forms and should not be limited to the embodiments set forth herein. Rather, these embodiments are provided so that the present disclosure will be thorough and complete, and will fully convey a scope of the present disclosure to those skilled in the art.

The term "including" and variations thereof, as used herein, mean open-ended including, that is, "including but not limited to." Unless specifically stated otherwise, the term "or" means "and/or.". The term "based on" means "based at least in part on". The term "another embodiment" means "at least one further embodiment." The terms "first," "second," and the like may refer to different or identical objects.

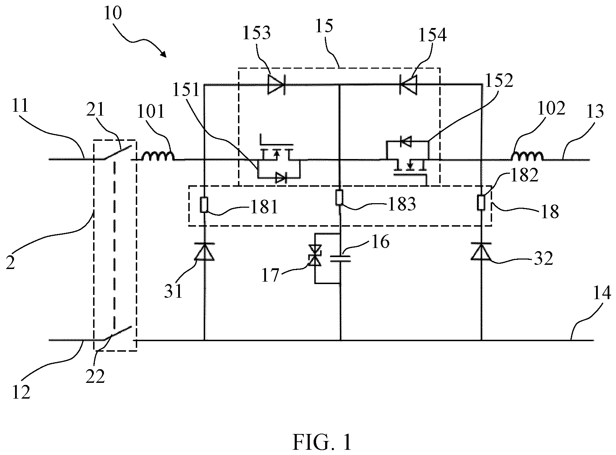

As described above, in a working process of a conventional solid state circuit breaker, at a moment when a short circuit occurs on a downstream line of the branch, a current of the upstream line changes greatly, and it is difficult to implement selective protection for the main loop. In addition, after a switching device of the solid state circuit breaker is disconnected, a voltage stress on the switching device is usually caused to be excessive due to superposition of inductive voltage of an inductor on the line and an input voltage of a power supply. Embodiments of the present disclosure provide a solid state circuit breaker, in the solution, by adopting the capacitor having the first end connected to the node between the first switching device and the second switching device and the second end connected to the node between the second input end and the second output end, electric energy input by a power supply can be stored, so as to release the electric energy in a case that a short circuit fault occurs in a downstream line of a branch, thereby reducing a current change of the upstream line. In addition, by adopting a bidirectional transient voltage suppression diode connected in parallel with the capacitor, an excessive voltage stress on the switching device of the solid state circuit breaker can be reliably prevent, so that the solid state circuit breaker is compatible with a TN-S system and an IT system. Hereinafter, a principle of the present disclosure will be described in conjunction with FIGS. 1 to 2.

FIG. 1 illustrates a schematic circuit diagram of a solid state circuit breaker 10 according to an embodiment of the present disclosure. As shown in FIG. 1, the solid state circuit breaker 10 described herein generally includes a first input end 11, a second input end 12, a first output end 13, a second output end 14, a first On-Off unit 15, a capacitor 16, and a bidirectional transient voltage suppression diode 17. The first input end 11 and the second input end 12 are configured to receive a power input. The first output end 13 and the second output end 14 are configured to provide a power output. The first On-Off unit 15 includes a first switching device 151 and a second switching device 152 connected in series between the first input end 11 and the first output end 13. A first end of the capacitor 16 is connected to a node between the first switching device 151 and the second switching device 152, and a second end of the capacitor 16 is connected to a node between the second input end 12 and the second output end 14. The bidirectional transient voltage suppression diode 17 is connected in parallel with the capacitor 16.

In an embodiment, in a case that a short circuit occurs between the first output end 13 and the second output end 14 and the second switching device 152 has not been turned off in time, the capacitor 16 can release electric energy, so that magnitude of a current on a downstream line where the second switching device 152 is located increases sharply, Then, magnitude of a current on an upstream line where the first switching device 151 is located is basically unchanged, so that a protection device connected to a main loop of the upstream line does not trip due to the short circuit of the branch, selective protection of the main loop is achieved.

In an embodiment, the bidirectional transient suppression diode 17 can limit a voltage value of a circuit within a predetermined threshold interval in a case that the circuit receives the power input, so as to perform overvoltage protection on the first switching device 151 and the second switching device 152, thereby greatly reducing voltage stresses on the first switching device 151 and the second switching device 152. Type selection of the bidirectional transient voltage suppression diode 17 may be determined according to magnitude of a voltage of a power supply input, specifications of the first switching device 151 and the second switching device 152, a clamping capability under an extreme working condition such as a surge, and a service life requirement of a solid state circuit breaker to which the bidirectional transient voltage suppression diode 17 belongs.

In an embodiment, the second switching device 152 is turned off in a case that the magnitude of the current on the downstream line where the second switching device 152 is located reaches a predetermined threshold. In other embodiments, the first input end 11 and the second input end 12 may serve as an output side of the circuit, and the first output end 13 and the second output end 14 may serve as an input side of the circuit. In this case, a line where the first switching device 151 is located is the downstream line, and a line where the second switching device 152 is located is the upstream line. In such a line, working principles of the first switching device 151 and the capacitor 16 are the same as working principles of the second switching device 152 and the capacitor 16 in the foregoing embodiment, and details are not repeatedly described herein. In an embodiment, the first switching device 151 and the second switching device 152 may be MOS transistors. It should be understood that, based on teachings given in the present disclosure, those of ordinary skill in the art may conceive that other types of the first switching device and the second switching device implement the foregoing functions, for example, insulated gate bipolar transistors (IGBT), etc., and all these implementations fall within the scope of the present disclosure.

In an embodiment, as shown in FIG. 1, the solid state circuit breaker 10 further includes a switching unit 2. The switching unit 2 includes a first isolation switch 21 and a second isolation switch 22. A first end of the first isolation switch 21 is connected to the first input end 11, and a first end of the second isolation switch 22 is connected to the second input end 12. The first isolation switch 21 and the second isolation switch 22 can reliably turn off and turn on the circuit in a manual opening or automatic opening manner. In an embodiment, the first isolation switch 21 and the second isolation switch 22 can be smart mechanical switches. It should be understood that, based on teachings provided in the present disclosure, those of ordinary skill in the art may conceive that other types of the first isolation switch and the second isolation switch implement the foregoing functions, and all these implementations all fall within the scope of the present disclosure.

With continued reference to FIG. 1, the solid state circuit breaker 10 further includes a first inductor 101 and a second inductor 102. A first end of the first inductor 101 is connected to a second end of the first isolation switch 21 and a second end of the first inductor 101 is connected to the first switching device 151. A first end of the second inductor 102 is connected to the second switching device 152 and a second end of the second inductor 102 is connected to the first output 13. The first inductor 101 and the second inductor 102 can respectively limit magnitudes of currents of the upstream line and the downstream line to be within a predetermined threshold interval, so as to prevent an excessive change of a transient current.

In an embodiment, as shown in FIG. 1, the solid state circuit breaker 10 further includes a first diode 31 and a second diode 32. A cathode of the first diode 31 is connected to a node between the first inductor 101 and the first switching device 151 and an anode of the first diode 31 is connected to a second end of the second isolation switch 22. A cathode of the second diode 32 is connected to a node between the second switching device 152 and the second inductor 102 and an anode of the second diode 32 is connected to a node between the capacitor 16 and the second output end 14.

In an embodiment, after a short circuit occurs between the first output end 13 and the second output end 14, in a case that the second switching device 152 is turned off, energy of the first inductor 101 may continue to flow to a branch where the capacitor 16 and the bidirectional transient voltage suppression diode 17 are located through a body diode or the third diode 153 of the first switching device 151, and meanwhile, energy of the second inductor 102 may continue to flow through the second diode 32.

In an embodiment, the first input end 11 and the second input end 12 may serve as an output side of a circuit, and the first output end 13 and the second output end 14 may serve as an input side of the circuit. In such a line, after a short circuit occurs between the first input end 11 and the second input end 12, in a case that the first switching device 151 is turned off, the energy of the second inductor 102 may continue to flow through a body diode or the fourth diode 154 of the second switching device 152 to the branch where the capacitor 16 and the bidirectional transient voltage suppression diode 17 are located, and meanwhile, the energy of the first inductor 101 may continue to flow through the first diode 31.

With continued reference to FIG. 1, the solid state circuit breaker 10 further includes a fusing unit 18. The fusing unit 18 includes a first fuse 181, a second fuse 182, and a third fuse 183. A first end of the first fuse 181 is connected to the node between the first inductor 101 and the first switching device 151 and a second end of the first fuse 181 is connected to the cathode of the first diode 31. A first end of the second fuse 182 is connected to a node between the first switching device 151 and the second inductor 102 and a second end of the second fuse 182 is connected to the cathode of the second diode 32. A first end of the third fuse 183 is connected to the node between the first switching device 151 and the second switching device 152 and a second end of the third fuse 183 is connected to the first end of the capacitor 16. The first fuse 181 and the second fuse 182 can fuse in a case that a positive electrode and a negative electrode of the power supply input or the power supply output are connected reversely, so as to perform overcurrent protection on a power supply input line. The third fuse 183 can fuse in the case that at least one of the capacitor 16 and the bidirectional transient voltage suppression diode 17 fails, so as to perform overcurrent protection on a line where the third fuse 183 is located.

In an embodiment, as shown in FIG. 1, the first On-Off unit 15 further includes a third diode 153 and a fourth diode 154. The third diode 153 is connected in parallel with the first switching device 151 and the fourth diode 154 is connected in parallel with the second switching device 152. The third diode 153 and the fourth diode 154 can improve overcurrent capabilities of the first switching device 151 and the second switching device 152, respectively.

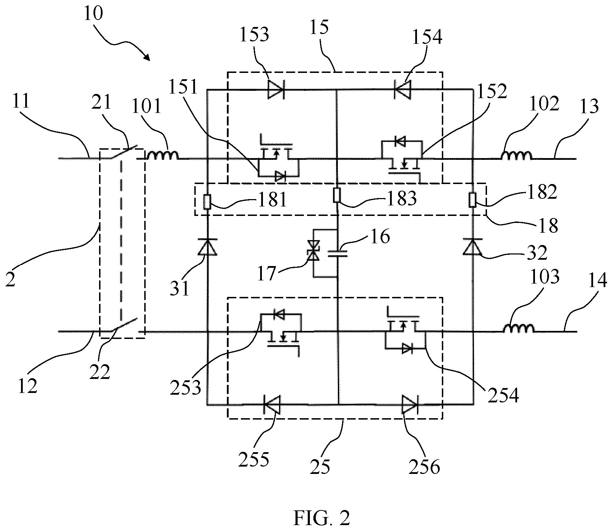

FIG. 2 illustrates a schematic circuit diagram of a solid state circuit breaker 10 according to another embodiment of the present disclosure. A difference between the circuit of the solid state circuit breaker 10 shown in FIG. 2 and the circuit of the solid state circuit breaker 10 shown in FIG. 1 lies in that structures on lines between the second input end 12 and the second output end 14 are different, and structures on other lines are the same, which are not repeated herein. The difference between the two will be introduced in detail hereinafter.

In an embodiment, as shown in FIG. 2, the solid state circuit breaker 10 further includes a second On-Off unit 25. The second On-Off unit 25 includes a third switching device 253 and a fourth switching device 254. The third switching device 253 and the fourth switching device 254 are connected in series between the second input end 12 and the second output end 14.

In an embodiment, as shown in FIG. 2, the solid state circuit breaker 10 further includes a third inductor 103. A first end of third inductor 103 is connected to the fourth switching device 254 and a second end of third inductor 103 is connected to the second output end 14. The third inductor 103 can limit magnitude of a current of a line where the third inductor 103 is located within a predetermined threshold interval, so as to prevent an excessive change of a transient current.

With continued reference to FIG. 2, the second switching unit 25 further includes a fifth diode 255 and a sixth diode 256. The fifth diode 255 is connected in parallel with the third switching device 253. The sixth diode 256 is connected in parallel with the fourth switching device 254. The fifth diode 255 and the sixth diode 256 can improve the overcurrent capability of the third switching device 253 and the fourth switching device 254, respectively.

In an embodiment, in a case that the first output end 13 and the second input end 12 are short-circuited to ground at the same time and a magnitude of a current reaches a predetermined threshold, the second switching device 152 can be turned off to achieve ground short protection of the circuit under a certain operating condition. In an embodiment, in a case that the first input end 11 and the second output end 14 are short-circuited to ground simultaneously and the magnitude of the current reaches a predetermined threshold, the fourth switching device 254 can be turned off to achieve ground short protection of the circuit under the certain operating condition.

In an embodiment, in a case that a short circuit occurs between the first output end 13 and the second output end 14 and the magnitude of the current reaches a predetermined threshold, at least one of the fourth switching device 254 and the second switching device 152 can be turned off. In an embodiment, in a case that a short circuit occurs between the first input end 11 and the second input end 12 and the magnitude of the current reaches the predetermined threshold, at least one of the third switching device 253 and the first switching device 151 can be turned off.

Having described embodiments of the disclosure above, the foregoing description is exemplary, not exhaustive, and is not limited to the embodiments disclosed. Many modifications and variations will be apparent to those of ordinary skill in the art without departing from the scope and spirit of the illustrated embodiments. Choice of terms used herein is intended to best explain the principles of the embodiments, practical application or technological improvements in a marketplace, or to enable others of ordinary skill in the art to understand the embodiments disclosed herein.

## Claims

1. A solid state circuit breaker (10), comprising:
a first input end (11) and a second input end (12) for receiving a power input;
a first output end (13) and a second output end (14) for providing a power supply output;
a first On-Off unit (15) comprising a first switching device (151) and a second switching device (152) connected in series between the first input end (11) and the first output end (13);
a capacitor (16), a first end of the capacitor (16) being connected to a node between the first switching device (151) and the second switching device (152), and a second end of the capacitor (16) being connected to a node between the second input end (12) and the second output end (14); and
a bidirectional transient voltage suppression diode (17) connected in parallel with the capacitor (16).

2. The solid state circuit breaker (10) of claim 1, wherein the solid state circuit breaker (10) further comprises a switching unit (2) comprising a first isolation switch (21) and a second isolation switch (22), a first end of the first isolation switch (21) being connected to the first input end (11), and a first end of the second isolation switch (22) being connected to the second input end (12).

3. The solid state circuit breaker (10) of claim 2, wherein the solid state circuit breaker (10) further comprises a first inductor (101) and a second inductor (102), a first end of the first inductor (101) being connected to a second end of the first isolation switch (21) and a second end of the first inductor (101) being connected to the first switching device (151), a first end of the second inductor (102) being connected to the second switching device (152) and a second end of the second inductor (102) being connected to the first output end (13).

4. The solid state circuit breaker (10) of claim 3, wherein the solid state circuit breaker (10) further comprises a first diode (31) and a second diode (32), a cathode of the first diode (31) being connected to a node between the first inductor (101) and the first switching device (151) and an anode of the first diode (31) being connected to a second end of the second isolation switch (22), a cathode of the second diode (32) being connected to a node between the second switching device (152) and the second inductor (102) and an anode of the second diode (32) being connected to a node between the capacitor (16) and the second output end (14).

5. The solid state circuit breaker (10) of claim 4, wherein the solid state circuit breaker (10) further comprises a fusing unit (18) comprising a first fuse (181), a second fuse (182), and a third fuse (183), a first end of the first fuse (181) being connected to the node between the first inductor (101) and the first switching device (151), and a second end of the first fuse (181) being connected to the cathode of the first diode (31), a first end of the second fuse (182) being connected to a node between the first switching device (151) and the second inductor (102) and a second end of the second fuse (182) being connected to the cathode of the second diode (32), a first end of the third fuse (183) being connected to the node between the first switching device (151) and the second switching device (152) and a second end of the third fuse (183) being connected to the first end of the capacitor (16).

6. The solid state circuit breaker (10) of any of claims 1 to 5, wherein the first On-Off unit (15) further comprises a third diode (153) and a fourth diode (154), the third diode (153) being connected in parallel with the first switching device (151), and the fourth diode (154) being connected in parallel with the second switching device (152).

7. The solid state circuit breaker (10) of any of claims 1 to 6, wherein the solid state circuit breaker (10) further comprises a second On-Off unit (25) comprising a third switching device (253) and a fourth switching device (254) connected in series between the second input end (12) and the second output end (14).

8. The solid state circuit breaker (10) of claim 7, wherein the solid state circuit breaker (10) further comprises a third inductor (103), a first end of the third inductor (103) being connected to the fourth switching device (254) and a second end of the third inductor (103) being connected to the second output end (14).

9. The solid state circuit breaker (10) of claim 7, wherein the second On-Off unit (25) further comprises a fifth diode (255) and a sixth diode (256), the fifth diode (255) being connected in parallel with the third switching device (253), and the sixth diode (256) being connected in parallel with the fourth switching device (254).
